(19) Europäisches Patentamt

European Patent Office

Office européen des brevets

(11) **EP 4 524 828 A1**

(12) **EUROPEAN PATENT APPLICATION**

(43) Date of publication:
**19.03.2025   Bulletin 2025/12**

(21) Application number: **23197985.7**

(22) Date of filing: **18.09.2023**

(51) International Patent Classification (IPC):
**G06N 10/60** $^{(2022.01)}$    **G06E 3/00** $^{(2006.01)}$
**G06N 10/40** $^{(2022.01)}$

(52) Cooperative Patent Classification (CPC):
**G06E 3/003; G06N 10/60;** G06N 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Q.ant GmbH**
**70565 Stuttgart (DE)**

(72) Inventors:
• **Cazalis, Jean**
**70372 Stuttgart (DE)**
• **Shah, Tirth**
**70193 Stuttgart (DE)**

(74) Representative: **Trumpf Patentabteilung**
**Trumpf SE + Co. KG**
**TH550 Patente und Lizenzen**
**Johann-Maus-Straße 2**
**71254 Ditzingen (DE)**

(54) **METHOD FOR OPERATING A PARAMETERIZED PHOTONIC QUANTUM CIRCUIT, A COMPUTING SYSTEM AND A COMPUTING DEVICE**

(57)     Method for operating a parameterized photonic quantum circuit (12), the method comprises the steps: a) providing the parameterized photonic quantum circuit (12), b) providing a calculation machine (14) for controlling the parameterized photonic quantum circuit (12), c) initializing an optimization problem on the calculation machine (14) and/or the parameterized photonic quantum circuit (12), and d) solving the optimization problem by controlling the parameterized photonic quantum circuit (12) using the calculation machine (14).

Fig. 1

**Description**

The invention relates to a method for operating a parameterized photonic quantum circuit, a computing system and a computing device.

Leonardo Banchi, Nicolás Quesada, and Juan Miguel Arrazola "Training Gaussian boson sampling distributions", Physical Review A 102, 012417 discloses a Gaussian boson sampling platform for photonic quantum computing and analytical gradient formulas for the Gaussian boson sampling distribution, which can be used for training devices using standard methods based on gradient descent.

It is an object of the invention to provide a method for operating a parameterized photonic quantum circuit, which is fast in information processing and/or provide better results. It is a further object of the present invention to provide a computing system and a computing device.

This object is achieved by a method according to claim 1, a computing system according to claim 12 and a computing device according to claim 13.

The invention relates to a method for operating a parameterized photonic quantum circuit. The method comprises the steps: a) providing a parameterized photonic quantum circuit, b) providing a calculation machine for controlling the parameterized photonic quantum circuit, c) initializing the optimization problem on the calculation machine and/or the parameterized photonic quantum circuit, and d) solving the optimization problem by controlling the parameterized photonic quantum circuit using the calculation machine.

Advantageously, the parameterized photonic quantum circuit enables a particularly fast information processing.

The parameterized photonic quantum circuit might be embodied as a Gaussian Boson Sampler. In particular, the Gaussian Boson Sampler may be easy to implement experimentally.

The parameterized photonic quantum circuit may comprise a light source for generating squeezed light, a number of interferometers, and a number of detectors. The squeezed light generated by the light source may be coupled into the number of interferometers and the number of detectors may detect the light passing through the number of interferometers. For example, the parameterized photonic quantum circuit may comprise a single interferometer.

At least one interferometer of the parameterized photonic quantum circuit may be a universal interferometer, which can be programmed to implement any linear transformation between multiple inputs. Each interferometer may comprise an input for coupling in at least a part of the squeezed light into the interferometer. At least one interferometer may comprise phase shifters. The phase shifters may be provided for adjusting or controlling light properties, in particular inside the interferometer. The phase shifters can be adjusted or controlled by amending their parameters. For example, at least one phase shifter may be embodied as an electro-optic modulator. The parameters may be a voltage of the electro-optic modulator. The phase shifter parameters of the number of interferometers may adjustably be coupled with each other. The number of interferometers may form a calculation circuit. The number of interferometers and/or the calculation circuit may comprise a number of outputs for coupling out the squeezed light. The number of detectors may correspond to the number of outputs.

The calculation machine may be embodied as a computer, in particular a personal computer or Field Programmable Gate Arrays (FPGA) or a calculation server. The calculation machine may be embodied as a classical computer. In particular, the calculation machine may work based on macroscopic states of electronic circuits. The calculation machine may comprise a central processing unit. The central processing unit may be embodied as a microprocessor.

The step c) may include all the necessary, in particular preparatory, steps to enable the parameterized photonic quantum circuit and the calculation machine to perform step d). In particular, the step c) may comprise the steps specifying the optimization problem and/or defining the boundary conditions of the optimization problem. The defining of the boundary conditions of the optimization problem may be done by submitting the boundary conditions to the calculation machine, for example by a user.

The step c) may comprise the step of selecting at least one parameter of the optimization problem to be optimize. The at least one parameter of the optimization problem to be optimize may be selected by a user. Alternatively, the calculation machine may comprise built-in methods. The built-in methods may define the parameter of the optimization problem to be optimize.

The step d) may comprise the step of adjusting the interferometers and squeezing parameters using the calculation machine, generating squeezed light using the light source, and measuring the squeezed light at the number of outputs using the number of detectors. The step d) may comprise the steps analyzing the measured squeezed light by the calculation machine, and controlling the light source and adjusting the interferometers depending on the analyzed squeezed light.

According to an embodiment of the method, the optimization problem is a quadratic unconstrained binary optimization problem or a polynomial unconstrained binary optimization problem. The quadratic unconstrained binary optimization problem or the polynomial unconstrained binary optimization problem may be determined by a set of binary variables $x_1, ..., x_m$ and a multivariate polynomial with degree at most $k \leq m$:

$$H(x_1, \ldots, x_m) = \sum_{J \in \mathcal{P}(m)} h_J \prod_{j \in J} x_j$$

where the sum is taken over the power set of {1, ..., m}. When $k \leq 2$, the problem may be a quadratic unconstrained binary optimization problem. Solving such as the quadratic unconstrained binary optimization problem or the polynomial unconstrained binary optimization problem amounts may be to find the assignment of binary variables which minimizes the energy:

$$\mathrm{argmin}_{x_1, \ldots, x_m} H(x_1, \ldots, x_m)$$

The optimization problem may be any combinatorial optimization which may be represented as a quadratic unconstrained binary optimization problem or as a polynomial unconstrained binary optimization problem, including but not limited to travelling salesman problem, clique partitioning problem or a flight-gate assignment problem.

According to an embodiment of the method, the step d) is based on using a conditional value-at-risk approach.

According to an embodiment of the method, the conditional value-at-risk approach comprises a parameter $\alpha$. A value of the parameter $\alpha$ is in the range from 0 to 1.

The conditional value-at-risk approach may be determined by:

$$C_\alpha(\theta) = \mathrm{CVaR}_\alpha \left( X\left( \hat{H}, \theta \right) \right)$$

where the parameter $\alpha \in [0,1]$, $X(\hat{H}, \theta)$ may be the distribution of the Hamiltonian promoted to a quantum observable in the current quantum state and $\mathrm{CVaR}_\alpha(X) = E[X | X \leq F_X^{-1}(\alpha)]$ may be the conditional value-at-risk with $\alpha$-tail of the random variable $X$ with cumulative density function $F_X$.

The conditional value-at-risk approach may encompass standard variational quantum eigensolver if $\alpha = 1$. When $\alpha = 1$ the expectation value of a quantum Hamiltonian in the current quantum state may be

$$C(\theta) = \left\langle \hat{H} \right\rangle_{\rho(\theta)}$$

where $\rho(\theta)$ may be the current quantum state and $\hat{H}$ the quadratic unconstrained binary optimization problem or the polynomial unconstrained binary optimization problem promoted to a quantum observable.

According to an embodiment of the method, step c) comprises the step c.1) determining a function of the optimization problem using the calculation machine. The step d) is based on minimizing or maximizing the function. Step c) may comprise the step selecting a number of binary variables of the function to be optimized, wherein the step d) is based on the selected number of binary variables of the function to be optimized. The result of step d) may be values at which the function takes its maximum or its minimum.

According to an embodiment of the method, the function comprises a number of binary variables. The step d) comprises the step d.1) mapping each binary variable of the function to a unique mode of the parameterized photonic quantum circuit. The result of step d) is a configuration of the unique modes of the parameterized photonic quantum circuit. The mapping of each binary variable of the function to a unique mode may be done using the calculation machine. The calculation machine may be adapted to obtain a result of step d) from the configuration of the unique modes of the parameterized photonic quantum circuit.

According to an embodiment of the method, step d) comprises the steps d.2) controlling the parameterized photonic quantum circuit by the calculation machine and detecting a number of output states of the parameterized photonic quantum circuit, d.3) analyzing the detected number of output states of the parameterized photonic quantum circuit by the calculation machine, and d.4) solving the optimization problem based on the analyzed output states.

According to an embodiment of the method, step d) comprises the step d.5) optimization of a control parameter for controlling the parameterized photonic quantum circuit by the calculation machine using a constrained optimization by linear approximations algorithm. The controlling of the parameterized photonic quantum circuit of step d) is based on the optimized control parameter. The constrained optimization by linear approximations may be embodied as a derivative-free optimization algorithm designed to solve constrained optimization problems.

The calculation machine may control the parameterized photonic quantum circuit depending on the optimized control parameter. The optimized control parameter may comprise a number of different parameters for controlling the parameterized photonic quantum circuit.

For example, the optimized control parameter may comprise a parameter for generating squeezed light using the light source of the parameterized photonic quantum circuit. In other words, the optimized control parameter may comprise a control parameter for controlling the light source. In particular, the optimized control parameter may comprise a parameter for squeezing gates of the light source. Alternatively or additionally, the optimized control parameter may comprise a setting parameter for the phase shifters in the numbers of interferometers of the parameterized photonic quantum circuit.

According to an embodiment of the method, step c) comprises the step c.2) selecting a Gaussian state representation. The step d) is based on the selected Gaussian state representation. The step c.2) might be done depending on the problem and/or the constraints of the problem. The Gaussian state representation may be embodied as a Bargmann representation or a Wigner representation. A user might do the step c.2), in particular using the calculation machine.

According to an embodiment of the method, step c) comprises the step c.3) selecting a number of maximum training steps. The step d) is based on a hybrid classical-quantum optimization loop. The hybrid classical-quantum optimization loop is done until the number of maximum training steps is reached or until a result is stable. A user might do the step c.3), in particular using the calculation machine.

According to an embodiment of the method, step c) comprises the step c.4) initializing the parameterized photonic quantum circuit in a random state. The calculation machine might do the step c.4). In particular, the calculation machine may select an arbitrary control parameter for controlling the parameterized photonic quantum circuit and initialize the parameterized photonic quantum circuit with the arbitrary control parameter.

The invention relates to a method for operating a parameterized photonic quantum circuit. The method comprises the steps: a) providing a parameterized photonic quantum circuit, b) providing a calculation machine for controlling the parameterized photonic quantum circuit, c) initializing the optimization problem on the calculation machine and/or the parameterized photonic quantum circuit, and d) solving the optimization problem by controlling the parameterized photonic quantum circuit using the calculation machine.

The invention relates to a computing system. The computing system comprises a parameterized photonic quantum circuit and a calculation machine for controlling the parameterized photonic quantum circuit. The computing system is adapted to execute at least a step d) of a previously described method. In particular, the calculation machine may be adapted to solve a quadratic unconstrained binary optimization problem or a polynomial unconstrained binary optimization problem by controlling the parameterized photonic quantum circuit based on using a conditional value-at-risk approach. The computing system may be adapted to execute the previously described method. In particular, the computing system may be adapted to execute the method steps of the previously described method executable by the computer system.

The invention relates to a computing device. The computing device comprises a parameterized photonic quantum circuit, and a calculation machine for controlling the parameterized photonic quantum circuit. The calculation machine is adapted to solve a quadratic unconstrained binary optimization problem or a polynomial unconstrained binary optimization problem by controlling the parameterized photonic quantum circuit based on using a conditional value-at-risk approach. The parameterized photonic quantum circuit might be embodied as a Gaussian Boson Sampler. The computing device may be adapted to execute the previously described method. In particular, the computing device may be adapted to execute the method steps of the previously described method executable by the computer device. The computing device may comprise functionally equivalent features to the computing system. Thus, the description of the computer system may apply mutatis mutandis to the computer device.

The invention will be described in detail with respect to the drawings schematically depicting embodiments of the invention. In detail:

Fig. 1    schematically shows a computing system,

Fig. 2    schematically shows a structure of a library of the calculation machine of the computing system depicted in Fig. 1,

Fig. 3    schematically shows a parameterized photonic quantum circuit of the computing system depicted in Fig. 1, and

Fig. 4    schematically shows a Variational Quantum Eigensolver with Conditional Value-at-risk of the computing system depicted in Fig. 1.

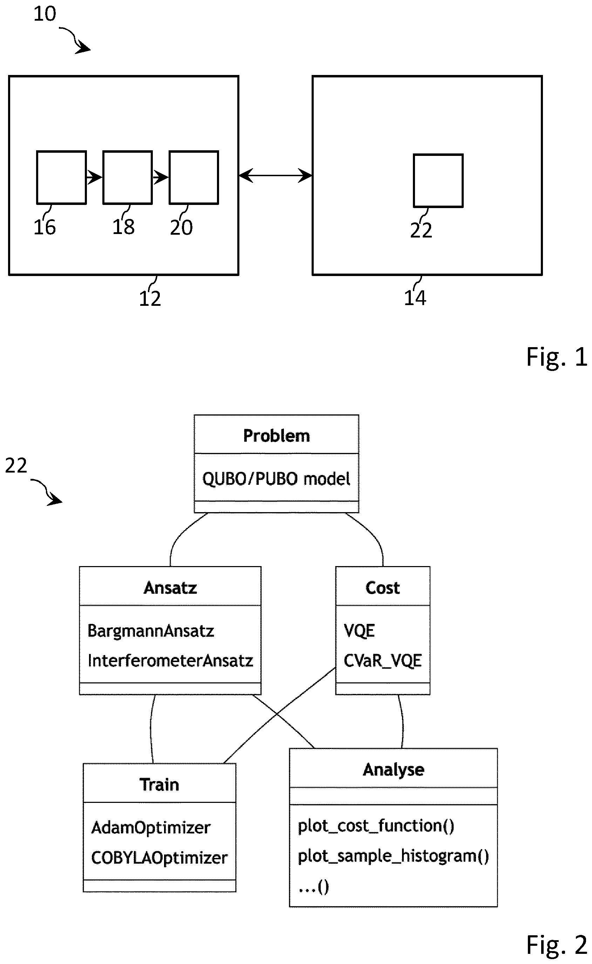

Fig. 1 shows a computing system 10. The computing system 10 comprises a parameterized photonic quantum circuit 12 in form of a Gaussian Boson Sampler and a calculation machine 14 for controlling the parameterized photonic quantum circuit 12.

The parameterized photonic quantum circuit 12 has a light source 16 for generating squeezed light, an interferometer 18 with phase shifters forming a calculation circuit, and a number of detectors 20. The interferometer 18 is adjustably tunable by controlling the phase shifters.

The phase shifters are embodied as electro-optic modulators. The interferometer 18 is tunable by adjusting a voltage applied to the electro-optic modulators.

The squeezed light generated by the light source 16 is coupled into the interferometer 18 and the number of detectors 20 detect the light passing through the interferometer 18. The detectors 20 are coupled to the calculation machine 14. The calculation machine 14 is adapted to control the parameterized photonic quantum circuit 12 depending on the detected light passing through the interferometer 18. In particular, the calculation machine 14 is adapted to control the parameterized photonic quantum circuit 12 by adjusting the phase shifter parameters in the interferometer 18 and/or by adjusting the squeezing parameters of the squeezed light.

The calculation machine 14 is embodied as a classical computer. This means that the calculation machine 14 comprises a central processing unit in form of a microprocessor. Additionally the calculation machine 14 is adapted to solve an optimization problem by controlling the parameterized photonic quantum circuit. For this purpose, the calculation machine 14 comprises a library 22.

The calculation machine 14 is adapted to solve a quadratic unconstrained binary optimization problem or a polynomial unconstrained binary optimization problem by controlling the parameterized photonic quantum circuit 12.

Quadratic Unconstrained Binary Optimization (QUBO) and Polynomial Unconstrained Binary Optimization (PUBO) problems are combinatorial optimization problems and are in general NP-hard problems. They are powerful frameworks for modelling and solving real-world optimization challenges, such as Travelling Salesman problem, Flight Gate Assignment or Clique Partitioning.

The parameterized photonic quantum circuit 12 in form of a Gaussian Boson Sampler (GBS) and its threshold detectors 20 as an ansatz in a Variational Quantum Eigensolver (VQE)-based approach using the Conditional Value-at-risk cost function allows solving and/or optimizing Quadratic Unconstrained Binary Optimization and Polynomial Unconstrained Binary Optimization problems. The Gaussian Boson Sampler is a non-universal photonic quantum computer.

In the example of Fig. 1, the input is a Quadratic Unconstrained Binary Optimization or a Polynomial Unconstrained Binary Optimization instance. The tasks is to find the configuration that approaches a minimizer of the input instance energy.

Solving Polynomial Unconstrained Binary Optimization or Quadratic Unconstrained Binary Optimization problems is relevant due to their ability to model diverse real-world optimization challenges, spanning fields such as logistics, finance, energy, and cryptography. These formulations address combinatorial optimization, resource allocation, network design, and more. Solving Polynomial Unconstrained Binary Optimization or Quadratic Unconstrained Binary Optimization problems facilitates optimal decision-making, efficient resource utilization, and the development of algorithms, impacting industries and research domains while offering benchmarking and complexity analysis opportunities.

A Polynomial Unconstrained Binary Optimization or Quadratic Unconstrained Binary Optimization instance is determined by:

- a set of binary variables $x_1, ..., x_m$; and
- a multivariate polynomial with degree at most $k \leq m$:

$$H(x_1, ..., x_m) = \sum_{J \in \mathcal{P}(m)} h_J \prod_{j \in J} x_j$$

where the sum is taken over the power set of {1, ..., m}. When $k \leq 2$, the problem is a Quadratic Unconstrained Binary Optimization.

Solving such as the Polynomial Unconstrained Binary Optimization or Quadratic Unconstrained Binary Optimization amounts to find the assignment of binary variables which minimizes the energy:

$$\text{argmin}_{x_1, ..., x_m} H(x_1, ..., x_m)$$

Variational Quantum Eigensolver-based approaches are Variational Quantum Algorithms (VQA).

Variational Quantum Algorithms is an approach to leverage the potential of quantum computing during the Noisy Intermediate-Scale Quantum era. With its versatility, Variational Quantum Algorithms encompasses a diverse array of algorithms that tackle various problem domains.

Most of the Variational Quantum Algorithms approaches fall within a common framework made of the following building blocks:

- a cost function to minimize;
- a parametrized quantum circuit which can be called ansatz;
- a parameter optimization scheme.

Variational Quantum Algorithms are typically implemented as hybrid algorithms, where a quantum computer is utilized to estimate the cost function or its gradient. Then, the quantum circuit parameters are updated to minimize the cost function, using classical optimization techniques, for example gradient-based methods.

Cost functions used in the embodiment of Fig. 1:
The Variational Quantum Eigensolver-based approaches the VQAs whose cost function is given either by

- the expectation value of a quantum Hamiltonian in the current quantum state (standard Variational Quantum Eigensolver):

$$C(\theta) = \left\langle \hat{H} \right\rangle_{\rho(\theta)}$$

where $\rho(\theta)$ is the current quantum state and $\hat{H}$ the Polynomial Unconstrained Binary Optimization or Quadratic Unconstrained Binary Optimization promoted to a quantum observable, or

- the Conditional Value-at-Risk (CVaR) with parameter $\alpha$ e [0,1]:

$$C_\alpha(\theta) = \text{CVaR}_\alpha \left( X(\hat{H}, \theta) \right)$$

where $X(\hat{H}, \theta)$ is the distribution of the Hamiltonian in the current quantum state and $\text{CVaR}_\alpha(X) = E[X | X \le F_X^{-1}(\alpha)]$ the Conditional Value-at-Risk with $\alpha$-tail of the random variable $X$ with cumulative density function $F_X$.

If $\alpha = 1$, Conditional Value-at-Risk encompasses standard Variational Quantum Eigensolver.
The parametrized ansatz used in the embodiment of Fig. 1:

- The parameterized photonic quantum circuit 12 in form of a Gaussian Boson Sampler comprises $m$ modes, where $m$ is the number of binary variables in the input Polynomial Unconstrained Binary Optimization or Quadratic Unconstrained Binary Optimization instance. Each binary variable is mapped to a unique mode.
- A quantum state in Gaussian Boson Sampler is prepared from the vacuum by applying parameterized squeezing gates and universal interferometer, which consists of an array of tunable Mach-Zehnder interferometers. All the parameters are collected into a parameter vector $\theta$.
- The output state is measured with threshold detectors 20, which record a 'click' when one or more photons are detected, 'no click' otherwise.
- Promotion of $H$ to a quantum observable $\hat{H}$: the binary variables $x_j$ is replaced by the projection onto the orthogonal space to the vacuum state in the optical mode corresponding to $x_j$.
- The measurement results are employed to evaluate the cost function, which can be the Variational Quantum Eigensolver or Conditional Value-at-Risk cost function associated with the Polynomial Unconstrained Binary Optimization or Quadratic Unconstrained Binary Optimization instance and the current Gaussian Boson Sampler configuration.
- When the cost function is Variational Quantum Eigensolver, it can also be computed exactly and analytically using only classical resources, i.e., classical computers.
- When the cost function is Conditional Value-at-Risk with ratio $\alpha$, we compute the Polynomial Unconstrained Binary Optimization or Quadratic Unconstrained Binary Optimization energy for each sample and compute the empirical average of the proportion $\alpha$ with the least energy.

The different representations of a continuous variable quantum state used in the embodiment of Fig. 1:

- Wigner representation: the Gaussian state is represented by its first two moments in the quadrature operators or ladder operators. In this representation, Gaussian unitaries, for example squeezing gates and passive Gaussian transformations, are represented as symplectic transformations.

- Bargmann representation: the Gaussian state is represented by a generating function called Bargmann function (aka stellar function). This function is closely related to the Husimi covariance matrix. The Fock representation is obtained by taking successive derivatives of the Bargmann function.

Possible ways to choose the parameters to optimize:

- Manual choice: the user can build his own optical parametrized optical circuit.
- Maximal entanglement with the least depth (Wigner representation): a non-local hypercubic circuit structure (repeated one or several times) is used in order to produce the maximum entangled state with the least number of parameters possible.

Classical optimizer:

Depending on the chosen cost function (Variational Quantum Eigensolver or Conditional Value-at-Risk), different classical optimizers are used for updating the quantum circuit parameters.

- Adaptive Moment Estimation (ADAM): an extension of gradient descent optimization methods that combines aspects of both momentum and adaptive learning rate techniques. Adaptive Moment Estimation adjusts the learning rate for each parameter individually and maintains moving averages of past gradients and squared gradients to adaptively scale the updates. It is used when the cost function is Variational Quantum Eigensolver since in this case it can be expressed analytically.
- Constrained Optimization BY Linear Approximations (COBYLA): a derivative-free optimization algorithm designed to solve constrained optimization problems. It is used when the cost function is Conditional Value-at-Risk since the objective function cannot be expressed as differentiable functions in this case, making traditional gradient-based methods impractical.

Structure of the library 22:

Fig. 2 shows the structure of the library 22. The optimizer of the calculation machine for training the Gaussian Boson Sampler depends on the Ansatz and on the Cost function. The analyzer of the calculation machine for analyzing the detected output states of the Gaussian Boson Sampler depends on the Ansatz and on the Cost function. The Ansatz and the Cost function depends on the selected Problem to be solved.
The method is implemented as follows:

Step 1 - Initialization:

- A user of the computing system chooses the Gaussian state representation Bargmann or Wigner. The Gaussian state representation depends on the problem and/or the constraints.
- The user chooses the parameters to optimize. Built-in methods are provided, but it can also be done manually by the user.
- The user chooses the cost function to minimize: VQE or VQE-CVaR with parameter $\alpha$.
- The user chooses the maximum number of training steps.
- The parametrized Gaussian Boson Sampler circuit is initialized randomly.

Step 2 - Hybrid classical-quantum optimization loop:

Repeat until the maximum number of training steps is reached or if the cost value is stable:

- if the cost function is VQE:

  - The cost function for the current parameter values is computed exactly, in an analytical form.
  - TensorFlow automatic differentiation routines (e.g., ADAM optimizer) are used to update the parameter values. TensorFlow is a free and open-source software library for machine learning and artificial intelligence. TensorFlow offers a set of optimizers for training neural networks, including ADAM, ADAGRAD, and Stochastic Gradient Descent. When training a model, different optimizers offer different modes of parameter tuning, often affecting a model's convergence and performance.

- if the cost function is VQE-CVaR:

  - Samples from the Gaussian Boson Sampler configured with the current parameter values are gathered.
  - The CVaR cost function with parameter $\alpha$ is computed on a classical computer in the following manner:

    - The samples are sorted in ascending order according to the QUBO/PUBO energy.
    - The cost is estimated with empirical mean over the $\alpha\%$ samples with the lowest energy.

  - The optimizer (COBYLA) is used to update the squeezing and interferometer parameters of a photonic integrated circuit in the next step.

At each step, the sample is keep track with the lowest energy.

Step 3 - Propose a solution to the PUBO/QUBO problem:

- Samples from the Gaussian Boson Sampler configured with the final parameter values are gathered.
- Return the configuration with the lowest PUBO/QUBO.

The example of Fig. 1 and 2 demonstrates that VQE-CVaR is a quantum algorithm that has been shown to perform well in solving combinatorial optimization problems. It leverages quantum resources such as entanglement which are unavailable to classical computers. Entanglement features strong quantum correlations, which cannot be computed efficiently on a classical computer.

The use of the Gaussian Boson Sampler with threshold detectors (TDs), which has two main advantages over other quantum platforms:

- Easiness of experimental implementation: squeezed light can be produced on demand with the current technologies, universal passive interferometers, and threshold detectors are among the cheapest and easiest-to-build photon detectors. Consequently, the quantum hardware our algorithm is meant for is likely to be available in the near future and before other quantum platforms.
- Fast information processing: photonic platforms feature high processing speed, especially those made of lithium-niobate which can reach regimes of several MHz sampling rate. Such regimes are not attainable for other quantum computing platforms such as those based on trapped ions, superconducting qubits, or cold atoms.

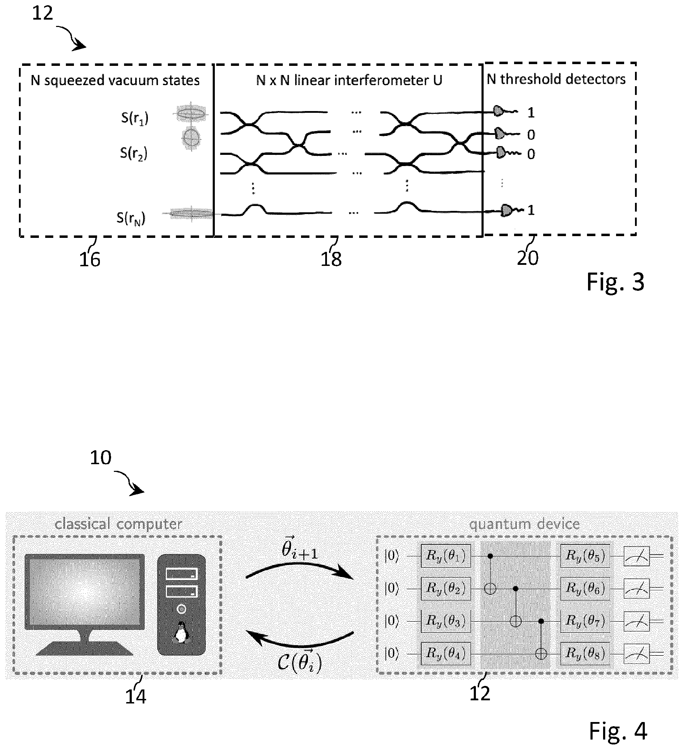

Fig. 3 shows the parameterized photonic quantum circuit of the computing system depicted in Fig. 1. The light source 16 is adapted to generate light having a squeezed vacuum state. The interferometer 18 is embodied as a linear interferometer. The detectors 20 are embodied as threshold detectors.

The Gaussian Boson Sampling is a non-universal photonic quantum computer. The Gaussian Boson Sampling circuit is parameterized by the symmetric matrix $\theta = U\mathrm{diag}(r_1, ...,r_N)U^T$. Binary outcomes $x = (x_1, ... x_N) \in \{0,1\}^N$ are obtained by measuring the output state with threshold detectors 20. The probability to detect the pattern

$$p(\mathbf{x}, \boldsymbol{\theta}) = \det(\Sigma(\theta))^{-1/2} \mathrm{Tor}\left(\mathbb{I} - (\Sigma^{-1}(\theta))_{(\mathbf{x})}\right)$$

, where Tor: Torontonian, a #P-hard matrix functional; $\Sigma(\theta)$: Husimi covariance matrix of the Gaussian state; the subscript (x) refers to the submatrix that corresponds to the pattern x.

If $A$ is a $2N \times 2N$ complex matrix with $N \times N$ blocks, $A_1, A_2, A_3, A_4$, and $x = (x_1, ... x_N) \in \{0,1\}^N$ a pattern, then the matrix $A_{(x)}$ is built by keeping the rows and columns of the blocks $A_1, A_2, A_3, A_4$ corresponding to the modes where a click has been detected, that is to the modes $j$ such that $x_j = 1$.

The GBS is a non-universal photonic quantum platform. The GBS ansatz consists of pure N-modes Gaussian states without displacement sampled using threshold detectors (TD). The quantum state is prepared from the vacuum by applying squeezing gates with parameters $(r_1, ..., r_N) \in \Re_+^N$ followed by a universal passive interferometer, whose action on creation/annihilation operators is described by a $N \times N$ unitary $U$. The output state is characterized by its Husimi covariance matrix $\Sigma$. Then, the photons are sent to the TDs which record a 'click' when one or more photons are detected, 'no click' otherwise. These outcome measures are described by the measurement operators

$$\hat{\Pi}_j^{(0)} = |0_j\rangle\langle 0_j| \quad \text{and} \quad \hat{\Pi}_j^{(1)} = \mathbb{I} - |0_j\rangle\langle 0_j|$$

, where $\mathbb{I}$ is the identity operator and $|0_j\rangle$ the vacuum on the optical mode j. The probability to detect a pattern is proportional to the Torontonian of the submatrix of $O = \mathbb{I} - \Sigma^{-1}$ corresponding to the pattern.

Fig. 4 schematically shows the Variational Quantum Eigensolver using the Conditional Value-at-Risk.

The Variational Quantum Eigensolver (VQE) is a hybrid quantum-classical algorithm for finding ground states of quantum Hamiltonian Q. The Variational Quantum Eigensolver iteratively minimize the cost function $C_1(\theta) = \langle \psi(\theta)|\hat{Q}|\psi(\theta)\rangle$. One can use the Conditional Value-at-Risk: $C_\alpha(\theta)$ = $\text{CVaR}_\alpha$ $(x(\hat{Q},\theta))$ , $\alpha \in (0,1]$, where

$$\text{CVaR}_\alpha(X) = \mathbb{E}[X \mid X \leq F_X^{-1}(\alpha)] \simeq (\lceil \alpha K \rceil)^{-1}(E_1 + \cdots + E_{\lceil \alpha K \rceil})$$

, $X(\hat{Q}, \theta)$ is the distribution of the observable Q in the state $|\psi(\theta)\rangle$, $Fx$ denotes the cumulative density of the random variable $X$, and $E_1 \leq \cdots \leq E_K$ are $K$ energy samples sorted in ascending order. It pushes weight in the lower $\alpha$-tail of the distribution.

In other words, the Conditional Value-at-Risk (CVaR) is implemented to improve the VQE approach to combinatorial optimization problems by restricting the search space to the $x$'s with the lowest energy. Here, the cost function to minimize reads $C(\theta) = \text{CVaR}_\alpha(X(\hat{Q}, \theta))$, $\alpha \in (0,1]$ , where $X(Q, \theta)$ is the distribution of the observable $\hat{Q}$ in the quantum state $|\psi(\theta)\rangle$ and $$\text{CVaR}_\alpha(X) = \mathbb{E}[X \mid X \leq F_X^{-1}(\alpha)]$$ the CVaR with tail $\alpha$-left of a random variable $X$, and $F_X$ is the cumulative density function of $X$. In the experiments, the cost function can be estimated by performing $K$ measurements of $|\psi(\theta)\rangle$ and averaging over the $\lceil \alpha K \rceil$ lowest energy values. When $\alpha = 1$, the VQE cost function is recoverd.

The performance of the GBS ansatz for solving the QUBO-FGA problem using the CVaR-VQE approach is assessed. The GBS is parameterized by the symmetric matrix $\theta = \boldsymbol{U}\text{diag}(r_1,...,r_N)U^T$. For fastening the training procedure, only the real parts of the $3N$ parameters corresponding to the smallest entries of the QUBO Hamiltonian are trained.

**Claims**

1. Method for operating a parameterized photonic quantum circuit (12), the method comprises the steps:

   a) providing the parameterized photonic quantum circuit (12),
   b) providing a calculation machine (14) for controlling the parameterized photonic quantum circuit (12),
   c) initializing an optimization problem on the calculation machine (14) and/or the parameterized photonic quantum circuit (12), and
   d) solving the optimization problem by controlling the parameterized photonic quantum circuit (12) using the calculation machine (14).

2. Method according to claim 1,

   - wherein the optimization problem is a quadratic unconstrained binary optimization problem or a polynomial unconstrained binary optimization problem.

3. Method according to any of the preceding claims,

   - wherein the step d) is based on using a conditional value-at-risk approach.

4. Method according to claim 3,

   - wherein the conditional value-at-risk approach comprises a parameter $\alpha$,
   - wherein a value of the parameter $\alpha$ is in the range from 0 to 1.

5. Method according to any of the preceding claims,

   - wherein step c) comprises the step
   c.1) determining a function of the optimization problem using the calculation machine (14),
   - wherein the step d) is based on minimizing or maximizing the function.

6. Method according to claim 5,

- wherein the function comprises a number of binary variables,
- wherein step d) comprises the step
d.1) mapping each binary variable of the function to a unique mode of the parameterized photonic quantum circuit (12),
- wherein the result of step d) is a configuration of the unique modes of the parameterized photonic quantum circuit (12).

7. Method according to any of the preceding claims,

- wherein step d) comprises the steps

d.2) controlling the parameterized photonic quantum circuit (12) by the calculation machine (14) and detecting a number of output states of the parameterized photonic quantum circuit (12),
d.3) analyzing the detected number of output states of the parameterized photonic quantum circuit (12) by the calculation machine (14), and
d.4) solving the optimization problem based on the analyzed output states.

8. Method according to any of the preceding claims,

- wherein step d) comprises the step
d.5) optimization of a control parameter for controlling the parameterized photonic quantum circuit (12) by the calculation machine (14) using a constrained optimization by linear approximations algorithm,
- wherein the controlling of the parameterized photonic quantum circuit (12) of step d) is based on the optimized control parameter.

9. Method according to any of the preceding claims,

- wherein step c) comprises the step
c.2) selecting a Gaussian state representation,
- wherein the step d) is based on the selected Gaussian state representation.

10. Method according to any of the preceding claims,

- wherein step c) comprises the step
c.3) selecting a number of maximum training steps,
- wherein the step d) is based on a hybrid classical-quantum optimization loop,
- wherein the hybrid classical-quantum optimization loop is done until the number of maximum training steps is reached or until a result is stable.

11. Method according to any of the preceding claims,

- wherein step c) comprises the step
c.4) initializing the parameterized photonic quantum circuit (12) in a random state.

12. Computing system (10), comprising

- a parameterized photonic quantum circuit (12), and
- a calculation machine (14) for controlling the parameterized photonic quantum circuit (12),
- wherein the computing system (10) is adapted to execute a step d) of a method according to any of the preceding claims.

13. Computing device, comprising

- a parameterized photonic quantum circuit (12), and
- a calculation machine (14) for controlling the parameterized photonic quantum circuit (12),
- wherein the calculation machine (14) is adapted to solve a quadratic unconstrained binary optimization problem or a polynomial unconstrained binary optimization problem by controlling the parameterized photonic quantum circuit (12) based on using a conditional value-at-risk approach.

10

16   18   20

12

22

14

Fig. 1

22

| Problem |
| --- |
| QUBO/PUBO model |

| Ansatz |
| --- |
| BargmannAnsatz |
| InterferometerAnsatz |

| Cost |
| --- |
| VQE |
| CVaR_VQE |

| Train |
| --- |
| AdamOptimizer |
| COBYLAOptimizer |

| Analyse |
| --- |
| plot_cost_function() |
| plot_sample_histogram() |
| ...() |

Fig. 2

12

| N squeezed vacuum states | N x N linear interferometer U | N threshold detectors |

$S(r_1)$

$S(r_2)$

$S(r_N)$

1
0
0

1

16

18

20

Fig. 3

10

classical computer

quantum device

$\vec{\theta}_{i+1}$

$\mathcal{C}(\vec{\theta}_i)$

$|0\rangle$  $R_y(\theta_1)$  $R_y(\theta_5)$

$|0\rangle$  $R_y(\theta_2)$  $R_y(\theta_6)$

$|0\rangle$  $R_y(\theta_3)$  $R_y(\theta_7)$

$|0\rangle$  $R_y(\theta_4)$  $R_y(\theta_8)$

14

12

Fig. 4

## EUROPEAN SEARCH REPORT

Europäisches
Patentamt
European
Patent Office
Office européen
des brevets

**Application Number**

EP 23 19 7985

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAZALIS JEAN ET AL: "Gaussian Boson Sampling for Binary Optimization", 2023 IEEE INTERNATIONAL CONFERENCE ON QUANTUM COMPUTING AND ENGINEERING (QCE), IEEE, vol. 2, 17 September 2023 (2023-09-17), pages 332-333, XP034478622, DOI: 10.1109/QCE57702.2023.10268 [retrieved on 2023-11-30] * page 332 – page 333, right-hand column, last paragraph * | 1-13 | INV. G06N10/60 G06E3/00 ADD. G06N10/40 |
| A | Panagiotis Kl Barkoutsos ET AL: "Improving Variational Quantum Optimization using CVaR", Quantum, 13 April 2020 (2020-04-13), page 256, XP055766241, DOI: 10.22331/q-2020-04-20-256 Retrieved from the Internet: URL:https://arxiv.org/pdf/1907.04769.pdf [retrieved on 2021-01-18] * esp. Section 4 * | 1-13 | |
| A | KISHOR BHARTI ET AL: "Noisy intermediate-scale quantum (NISQ) algorithms", ARXIV.ORG, CORNELL UNIVERSITY LIBRARY, 201 OLIN LIBRARY CORNELL UNIVERSITY ITHACA, NY 14853, 6 October 2021 (2021-10-06), XP091066953, * esp. Section II-A, 3 * | 1-13 | TECHNICAL FIELDS SEARCHED (IPC) G06E G06N |
| A | WO 2023/073371 A1 (ORCA COMPUTING LTD [GB]) 4 May 2023 (2023-05-04) * the whole document * | 1-13 | |

-/--

The present search report has been drawn up for all claims

| Place of search | Date of completion of the search | Examiner |
|---|---|---|
| The Hague | 16 February 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches Patentamt
European Patent Office
Office européen des brevets

Application Number

EP 23 19 7985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 612 332 A (ORCA COMPUTING LTD [GB]) 3 May 2023 (2023-05-03) * the whole document * ----- | 1-13 | |

TECHNICAL FIELDS
SEARCHED (IPC)

The present search report has been drawn up for all claims

| Place of search | Date of completion of the search | Examiner |
|---|---|---|
| The Hague | 16 February 2024 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 7985

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2024

| Patent document cited in search report | Publication date | Patent family member(s) | Publication date |
|---|---|---|---|
| WO 2023073371 A1 | 04-05-2023 | NONE | |
| GB 2612332 A | 03-05-2023 | GB 2612332 A | 03-05-2023 |
| | | GB 2612379 A | 03-05-2023 |
| | | US 2023133597 A1 | 04-05-2023 |
| | | US 2023140189 A1 | 04-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEONARDO BANCHI** ; **NICOLÁS QUESADA** ; **JUAN MIGUEL ARRAZOLA**. Training Gaussian boson sampling distributions. *Physical Review A*, vol. 102, 012417